# FASCICULE DE BREVET EUROPEEN

(11) **EP 0 465 373 B1**
(45) Date de publication et mention de la délivrance du brevet: **28.06.1995**
(21) Numéro de dépôt: 91401867.6
(22) Date de dépôt: 05.07.1991
(51) Int. Cl.: C08B 37/12

(54) **Procédé d'obtention de kappa carraghénanes**
Verfahren zur Gewinnung von Kappa-Carrageenanen
Process for obtaining kappa-carrageens

(30) Priorité: 06.07.1990 FR 9008639
(43) Date de publication de la demande: 08.01.1992
(73) Titulaire: SYSTEMS BIO-INDUSTRIES, 92641 Boulogne-Billancourt Cédex (FR)
(72) Inventeur: Lhonneur, Jean-Pierre, F-50500-Carentan (FR)
(74) Mandataire: Gillard, Marie-Louise

(56) Documents cités:
- PATENT ABSTRACTS OF JAPAN, vol. 9, no. 192 (C-296)(1915) 8 Août 1985 & JP-A-60 063 201 ( ERIMOCHIYOU ) 11 Avril 1985
- PATENT ABSTRACTS OF JAPAN, vol. 5, no. 164 (C-76)(836) 21 Octobre 1981 & JP-A-56 095 901 ( MASAYUKI MATSUMOTO ) 3 Août 1981
- PATENT ABSTRACTS OF JAPAN, vol. 8, no. 205 (C-243)(1642) 19 Septembre 1984 & JP-A-59 096 102 ( MITSUBISHI ACETATE ) 2 Juin 1984
- PATENT ABSTRACTS OF JAPAN, vol. 6, no. 98 (C-106)(976) 8 Juin 1982 & JP-A-57 028 102 ( SANEI KAGAKU KOGYO K.K. ) 15 Février 1982
- JAPANESE PATENTS GAZETTE, Section Ch, Week 8428, 22 Août 1984 Derwent Publications Ltd., London, GB; Class D, Page 14, AN 84-173975/28 & JP-A-59 096 102 (MITSUBISHI ACETATE)

## Description

La présente invention concerne un perfectionnement au procédé d'obtention de kappa carraghénanes.

Les kappa carraghénanes sont des polysaccharides sulfatés, utilisés en particulier dans les industries alimentaires et cosmétiques pour leur pouvoir gélifiant. Ces carraghénanes sont naturellement présents dans les algues rouges; l'espèce Euchema cottonii, cultivée aux Philippines et en Indonésie, ne contient que des carraghénanes de type kappa et mu et elle est utilisée pour l'obtention des kappa carraghénanes.

Dans le procédé industriel classique d'obtention des divers carraghénanes, - procédé tel que notamment décrit dans Industrial Gums par R.L. Whistler, Academic Press, New York and London, 1973, pages 90-91, point 4 -, les algues sont traitées par l'eau chaude jusqu'à ce que tout le carraghénane soit solubilisé. On sépare alors les insolubles par filtration à chaud et on précipite le polysaccharide par addition d'alcool isopropylique dans l'extrait ; le polysaccharide est finalement isolé après égouttage, lavage, pressage et séchage. Ce procédé est celui utilisé pour obtenir tous les types de carraghénane sachant que, pour obtenir du kappa carraghénane pur, on ajoute dans l'eau d'extraction des Euchema cottonii une base, généralement un hydroxyde alcalin.

Dans le cas du kappa carraghénane, un autre procédé d'isolement est aussi utilisé, qui met à profit la gélification des solutions en présence d'ions potassiques. Dans ce cas, l'extrait débarrassé des insolubles est versé dans une solution de chlorure de potassium contenant de 100 g à 300 g de KCl pour 100 g de carraghénane introduit ; le gel formé est alors égoutté jusqu'à une concentration en polysaccharide de 2 à 5 % (p/v), puis congelé à une température de -5°C à -15°C ; lors de cette étape, le gel de carraghénane libère de l'eau qui est séparée et le carraghénane restant est séché de façon classique. Un tel procédé est notamment décrit dans Industrial Gums par R.L. Whistler, Academic Press, New York and London, 1973, pages 125-126, point 3.

Le procédé de la présente invention est moins coûteux car il ne nécessite pas l'utilisation d'alcool. Par ailleurs, il consomme moins d'énergie et il est plus rapide que le procédé avec congélation ; en outre, il peut être mis en oeuvre en continu contrairement audit procédé avec congélation.

Le procédé selon la présente invention est un procédé dans lequel :
1) on traite, à une température comprise entre 80°C et 100°C, des algues de type Euchema cottonii par une solution aqueuse basique pour solubiliser le carraghénane ;
2) on filtre à chaud la suspension chaude ainsi obtenue pour générer un extrait clarifié ;
3) on précipite le carraghénane contenu dans ledit extrait ;
4) on élimine la majeure partie de l'eau dudit carraghénane.

De façon caractéristique :
- la teneur en ions K⁺ de l'extrait généré à l'étape 2) est ajustée à une valeur comprise entre 10 et 20 g/l, des ions K⁺ étant, si nécessaire, ajoutés, avant ou après la filtration ; et
- à l'étape 3), on pulvérise ledit extrait clarifié, dont la température est comprise entre 80°C et 95°C, dans une enceinte ventilée et refroidie, pour former une masse - imprégnée d'eau - de miniparticules dont la température est comprise entre 35°C et 45°C.

Afin d'avoir des solutions fluides à la température de traitement et une concentration suffisante de kappa carraghénane dans l'extrait clarifié pour que les gouttelettes formées par pulvérisation gélifient spontanément, on traite les algues sèches par une quantité d'eau suffisante pour que l'extrait clarifié contienne de 10 g/l à 40 g/l de kappa carraghénane et de préférence de 20 à 25 g/l. On introduit dans l'eau une base minérale, de préférence de l'hydroxyde de sodium, en quantité suffisante pour transformer le mu carraghénane en kappa carraghénane ; on en introduit en général de 30 à 80 g par litre d'eau. Dans la première étape du procédé, la suspension d'algues est maintenue sous agitation à une temperature comprise entre 80°C et 100°C, et de préférence 90°C, pendant la durée nécessaire au passage en solution de la totalité du carraghénane présent, en général entre 10 et 20 h, au bout desquelles la suspension est pratiquement homogène.

Avant de séparer les particules solides, on introduit dans le milieu une quantité suffisante d'ions potassium, sous forme d'un sel minéral de potassium, tel que KCl ou K₂SO₄, de telle sorte qu'il y ait dans l'extrait entre 50 et 100 % en poids d'ions potassium par rapport au poids du carraghénane, étant entendu que l'algue de départ contient elle-même du chlorure de potassium (en général environ 15 % en poids) que l'on retrouve dans l'extrait.

On peut aussi n'ajuster la teneur en ions potassium qu'après la filtration.

On peut séparer la totalité des particules solides ou simplement les particules étrangères telles que par exemple sable ou débris de coquillages. Dans le second cas, le carraghénane finalement isolé, semi-raffiné, contient encore la cellulose des algues.

Pour obtenir le polysaccharide pur , la suspension, toujours à une température comprise entre 80°C et 100°C, est filtrée de façon classique par exemple dans un filtre clos à pression avec une quantité suffisante d'un additif de filtration tel qu'une terre de diatomées ou une perlite qui formera un lit retenant toutes les particules.

Pour obtenir un produit semi-raffiné, la filtration est effectuée sur un tamis vibrant ou rotatif comportant des toiles de mailles comprises entre 250 et 1 000 »m.

L'extrait clarifié, plus ou moins transparent, ainsi obtenu, dont la température est comprise entre 80°C et 95°C, est ensuite gélifié en miniparticules par passage sous légère pression dans une ou des buse(s) de pulvérisation, dite(s) à cône creux, c'est-à-dire dont la forme permet d'obtenir un cône creux de particules en aval, telle(s) que celle(s) commercialisée(s) par les sociétés Giesler ou Emani.

La pression d'introduction de l'extrait dans chaque buse est en général comprise entre 2 x 10⁵ Pa et 10⁶ Pa.

Ladite (Lesdites) buse(s) débouche(nt) dans la partie supérieure d'une enceinte ouverte ; un léger courant d'air à température ambiante, c'est-à-dire vers 20°C, parcourt le haut de cette enceinte de telle sorte que l'eau soit éliminée sous forme de vapeur et ne tombe pas dans le fond de l'enceinte avec les micro-particules de gel ; la température dans le haut de l'enceinte est ainsi de 65°C environ.

L'ensemble de l'enceinte est aussi refroidi, par exemple par une circulation de liquide dans sa paroi en double enveloppe pour que les miniparticules qui tombent par gravité sur te fond de l'enceinte soient finalement à une température inférieure à 45°C.

En outre, et particulièrement pour les opérations en continu, le fond de l'enceinte est équipé d'un dispositif qui permet le prélèvement de la masse déposée constituée d'eau et de carraghénane . On a constaté que les miniparticules de gel, maintenues quelque temps à une température inférieure à 45°C, de préférence sous agitation, perdaient une partie de leur eau par un phénomène de synérèse, ce qui facilite les opérations de pressage ultérieures et on préfère prélever de façon telle que les miniparticules séjournent dans le bas de l'enceinte à une température comprise entre 35 et 45°C, de préférence 40 à 45°C, pendant 0,5 heure à 3 heures.

La masse finalement extraite de l'enceinte contient plus de 90 % d'eau dont on élimine ensuite la majeure partie par un pressage sur un filtre, de préférence très progressif, pour favoriser la synérèse et ne pas colmater les pores dudit filtre ; cette opération peut être effectuée dans un filtre-presse à plateau ou à membrane, en général en couche mince d'épaisseur inférieure à 5 cm ou de préférence dans un filtre à bande transporteuse continue, du type de ceux couramment utilisés pour la concentration des boues résiduaires du traitement des eaux ou des papiers.

La masse humide de carraghénane obtenue est ensuite séchée de façon classique, dans un courant d'air chaud, par exemple dans un séchoir à lit d'air fluidisé, jusqu'à obtenir une quantité d'eau résiduelle comprise entre 5 % et 15 % en poids, pourcentage généralement admis dans les carraghénanes commercialisés, avant d'être conditionnée ; pour obtenir un kappa carraghénane de qualité supérieure, notamment non coloré, il est préférable de laver avant séchage la masse issue du pressage avec une solution aqueuse de chlorure de potassium, contenant de 25 à 50 g de chlorure de potassium par litre ; l'eau est ensuite éliminée par un nouveau pressage et le produit est séché.

Dans ce qui suit, on décrit deux exemples de réalisation du procédé de l'invention.

### EXEMPLE 1

On disperse 1,7 t d'algues sèches de type Euchema cottonii dans 20 000 l d'eau à 90°C, contenant 80 kg d'hydroxyde de sodium. Le mélange est maintenu durant 15 heures sous agitation à cette température. On introduit alors, toujours à cette température, 90 kg de chlorure de potassium puis 500 kg de terre de diatomées ou de perlite. La suspension est ensuite filtrée à 90°C dans un filtre clos sous pression et le filtrat, toujours à 90°C, est introduit dans une enceinte refroidie de 5 000 à 20 000 l par 1 à 5 buses à cône creux de 4 mm de diamètre, la pression d'introduction dans chaque buse étant de 3 x 10⁵ Pa. Les miniparticules de gel formées, à forte teneur en eau, tombent au fond de l'enceinte, où elles séjournent sous agitation à une température de 42°C, pendant 0,5 à 3 heures avant d'être soutirées. Cette masse de particules de carraghénane qui contient 96 % d'eau est alors introduite, toujours à la température de 42°C, dans un filtre à bande presseuse sur une épaisseur de 6 à 8 cm pour donner à ta sortie un film de carraghénane de 1 cm environ d'épaisseur contenant encore 80 % d'eau. La masse est alors mise en suspension dans de l'eau contenant 30 g/l de KCl à raison de 2 000 l par 1 000 l de produit pressé, puis pressée à nouveau jusqu'à un extrait sec de 20 % à 25 %, et enfin broyée et séchée dans un séchoir à lit d'air fluidisé, de façon classique.

On obtient ainsi 400 kg de carraghénane à 5 % en poids d'eau, contenant 10 % en poids de KCl.

### EXEMPLE 2

On effectue la solubilisation des carraghénanes des algues comme à l'exemple 1. Puis, la suspension obtenue après addition du chlorure de potassium est passée sur un tamis équipé de toiles de mailles de 500 »m de manière à éliminer toutes les particules étrangères à l'algue (sable, débris de coquillages). La suspension ainsi épurée, toujours à 90°C, est pulvérisée comme dans l'exemple 1, pour donner finalement, après séchage, 540 kg de carraghénane, en mélange avec la cellulose de l'algue, contenant 10 % en poids de KCl et 50 % d'eau.

## Revendications

1. Procédé d'obtention de kappa carraghénanes, dans lequel :
1) on traite, à une température comprise entre 80°C et 100°C, des algues de type Euchema cottonii par une solution aqueuse basique pour solubiliser le carraghénane ;
2) on filtre à chaud la suspension chaude ainsi obtenue pour générer un extrait clarifié ;
3) on précipite le carraghénane contenu dans ledit extrait ;
4) on élimine la majeure partie de l'eau dudit carraghénane ; ledit procédé étant caractérisé en ce que :
- la teneur en ions K⁺ de l'extrait généré à l'étape 2) est ajustée à une valeur comprise entre 10 et 20 g/l, des ions K⁺ étant, si nécessaire, ajoutés, avant ou après la filtration ; et en ce que
- à l'étape 3), on pulvérise ledit extrait clarifié, dont la température est comprise entre 80°C et 95°C, dans une enceinte ventilée et refroidie, pour former une masse - imprégnée d'eau - de miniparticules dont la température est comprise entre 35°C et 45°C.

2. Procédé selon la revendication 1, caractérisé en ce que la filtration est effectuée sur un tamis comportant des toiles de mailles comprises entre 250 »m et 1 000 »m.

3. Procédé selon l'une des revendications 1 ou 2, caractérisé en ce que l'extrait clarifié contient de 10 g/l à 40 g/l de carraghénane.

4. Procédé selon l'une quelconque des revendications 1 à 3, caractérisé en ce que l'extrait clarifié est pulvérisé sous une pression comprise entre 2 x 10⁵ Pa et 10⁶ Pa par au moins une buse à cône creux.

5. Procédé selon l'une quelconque des revendications 1 à 4, caractérisé en ce que la masse des miniparticules de gel de carraghénane récoltée est maintenue pendant 0,5 à 3 h à une température comprise entre 35°C et 45°C, et l'eau séparée avant l'étape 4).

6. Procédé selon l'une quelconque des revendications 1 à 5, caractérisé en ce que la majeure partie de l'eau de la masse des miniparticules est éliminée par pressage sur un filtre.

7. Procédé selon la revendication 6, caractérisé en ce que ledit pressage est effectué dans un filtre à bande transporteuse continue.

8. Procédé selon l'une quelconque des revendications 1 à 7, caractérisé en ce que le carraghénane est finalement séché dans un courant d'air chaud.

## Claims

1. Process for the production of kappa carrageenans, which comprises the steps of:
1) treating algae of the *Euchema cottonii* type with a basic aqueous solution, at a temperature of between 80°C and 100°C, in order to solubilize the carrageenan;
2) filtering under heat the obtained hot suspension to produce a clarified extract;
3) precipitating the carrageenan contained in said extract;
4) removing the major part of the water from said carrageenan;
said process being characterized in that:
- the content of K⁺ ions of the extract produced in step 2) is adjusted to a value of between 10 and 20 g/l, K⁺ ions being added, if necessary, before or after filtration; and in that
- in step 3), said clarified extract, whose temperature is between 80°C and 95°C, is sprayed into a cooled ventilated vessel so as to form a mass - impregnated with water - of miniparticles whose temperature is between 35°C and 45°C.

2. Process according to claim 1, characterized in that filtration is performed on a screen equipped with cloths having meshes of between 250 »m and 1,000 »m.

3. Process according to one of claims 1 or 2, characterized in that the clarified extract contains from 10 g/l to 40 g/l of carrageenan.

4. Process according to any one of claims 1 to 3, characterized in that the clarified extract is sprayed under a pressure of between 2 x 10⁵ Pa and 10⁶ Pa through at least one hollow-cone nozzle.

5. Process according to any one of claims 1 to 4, characterized in that the recovered mass of miniparticles of carrageenan gel is kept at a temperature of between 35°C and 45°C for 0.5 to 3 hours, and the water is separated off before step 4).

6. Process according to any one of claims 1 to 5, characterized in that the major part of the water of the mass of the miniparticles is removed by pressing on a filter.

7. Process according to claim 6, characterized in that said pressing operation is performed in a filter with a continuous conveying belt.

8. Process according to any one of claims 1 to 7, characterized in that the carrageenan is finally dried in a stream of hot air.

## Patentansprüche

1. Verfahren zur Gewinnung von κ-Carrageenanen, das folgende Schritte umfaßt:
1. Behandlung von Algen der Art Euchema cottonii bei einer Temperatur von 80 - 100 °C mit einer wäßrigen basischen Lösung zur Auflösung des Carrageenans,
2. Heißfiltration der so erhaltenen heißen Suspension zur Erzeugung eines geklärten Extrakts,
3. Ausfällung des in dem Extrakt enthaltenen Carrageenans,
4. Entfernung des Großteils des Wassers aus dem Carrageenan,
dadurch gekennzeichnet, daß
der Gehalt des in Schritt 2 erzeugten Extrakts an K⁺-Ionen auf einen Wert von 10 bis 20 g/l eingestellt wird, wobei K⁺-Ionen erforderlichenfalls vor oder nach der Filtration zugesetzt werden, und
- in Schritt 3 der geklärte Extrakt, dessen Temperatur 80 bis 95 °C beträgt, in einem belüfteten und gekühlten Behälter unter Bildung einer mit Wasser imprägnierten Masse von Minipartikeln zerstäubt wird, deren Temperatur 35 bis 45 °C beträgt.

2. Verfahren nach Anspruch 1, dadurch gekennzeichnet, daß durch ein Sieb aus einem Gewebe mit einer Maschenweite von 250 bis 1000 »m filtriert wird.

3. Verfahren nach Anspruch 1 oder 2, dadurch gekennzeichnet, daß der geklärte Extrakt Carrageenan in einer Konzentration von 10 bis 40 g/l enthält.

4. Verfahren nach einem der Ansprüche 1 bis 3, dadurch gekennzeichnet, daß der geklärte Extrakt unter einem Druck von 2,0·10⁵ bis 10⁶ durch mindestens eine Hohlkegeldüse zerstäubt wird.

5. Verfahren nach einem der Ansprüche 1 bis 4, dadurch gekennzeichnet, daß die gewonnene Masse von Minipartikeln aus Carrageenan-Gel 0,5 bis 3 h bei einer Temperatur von 35 bis 45 °C gehalten und Wasser vor Schritt 4 abgetrennt wird.

6. Verfahren nach einem der Ansprüche 1 bis 5, dadurch gekennzeichnet, daß der Großteil des Wassers der Masse von Minipartikeln durch Anpressen auf einem Filter entfernt wird.

7. Verfahren nach Anspruch 6, dadurch gekennzeichnet, daß das Anpressen auf einem kontinuierlich arbeitenden Bandfilter durchgeführt wird.

8. Verfahren nach einem der Ansprüche 1 bis 7, dadurch gekennzeichnet, daß das Carrageenan abschließend in einem heißen Luftstrom getrocknet wird.
